# EUROPÄISCHE PATENTSCHRIFT

(11) **EP 2 331 913 B1**
(45) Veröffentlichungstag und Bekanntmachung des Hinweises auf die Patenterteilung: **08.07.2015**
(21) Anmeldenummer: 09772241.7
(22) Anmeldetag: 20.05.2009
(51) Int. Cl.: G01D 5/244, G01D 5/347

(54) **VORRICHTUNG ZUR KLEMMENDEN BEFESTIGUNG EINES MASSSTABS**
DEVICE FOR THE CLAMPING ATTACHMENT OF A SCALE
DISPOSITIF DE FIXATION D'UNE RÈGLE PAR SERRAGE

(30) Priorität: 01.07.2008 DE 102008030718
(43) Veröffentlichungstag der Anmeldung: 15.06.2011
(73) Patentinhaber: Dr. Johannes Heidenhain GmbH, 83301 Traunreut (DE)
(72) Erfinder: MAYER, Reinhard, 83278 Traunstein (DE)
(86) Internationale Anmeldenummer: PCT/EP2009/056139
(87) Internationale Veröffentlichungsnummer: WO 2010/000541

(56) Entgegenhaltungen:
- EP-A1- 0 264 801
- WO-A1-2006/133753
- DE-A1- 19 613 557

## Beschreibung

Die Erfindung betrifft eine Vorrichtung zur klemmenden Befestigung eines Maßstabs gemäß dem Oberbegriff des Anspruchs 1.

Weiterhin betrifft die Erfindung eine Vorrichtung mit einem an einer Anbaufläche eines Trägers klemmend befestigten Maßstab gemäß den Merkmalen des Anspruchs 6.

Eine weit verbreitete Art der Befestigung eines Maßstabs an einer Anbaufläche ist das Klemmen.

Zur Klemmung werden federnde Klemmelemente in Form von federnden Klammern verwendet, welche an der Anbaufläche angeschraubt werden und dabei eine Klemmkraft auf den Maßstab ausüben. Eine derartige Vorrichtung ist aus der DE 3008384 A1 bekannt.

Eine weitere Vorrichtung zur klemmenden Befestigung eines Maßstabs, von der unsere Erfindung ausgeht, ist in der WO 2006/133753 A1 beschrieben. Dabei finden auch Klemmelemente in Form von federnden Klammern Verwendung, die den Maßstab an eine Anbaufläche drängen. Die WO 2006/133753 A1 zeigt, dass bereits Anstrengungen unternommen wurden, den Maßstab einerseits an eine Anbaufläche zu drängen und andererseits auch senkrecht dazu einzuspannen. Figur 5 sowie die Figuren 7 bis 11 der WO 2006/133753 A1 zeigen hierzu Klemmelemente, die jeweils ein Federelement aufweisen, das den Maßstab in einer ersten Richtung an die Anbaufläche drängt und die jeweils ein weiteres Federelement aufweisen, das senkrecht zum ersten Federelement federnd ausgebildet ist und auf den Maßstab eine Klemmkraft in eine zweite Richtung ausübt. Das Problem dabei ist aber, die Klemmkraft in dieser zweiten Richtung aufzubringen bzw. einzuleiten. Wie die Figuren 9 und 10 der WO 2006/133753 A1 zeigen, wurde hierzu eine Montagevorrichtung vorgeschlagen.

Aufgabe der Erfindung ist es, eine Vorrichtung zu schaffen, mit welcher der Maßstab einfach und reproduzierbar befestigt werden kann.

Diese Aufgabe wird durch die Vorrichtung mit den Merkmalen des Anspruches 1 gelöst.

Weiterhin wird diese Aufgabe durch die Vorrichtung mit den Merkmalen des Anspruchs 6 gelöst.

Die erfindungsgemäß ausgestaltete Vorrichtung hat den Vorteil, dass die zum Klemmen des Maßstabs an einen Träger in zwei senkrecht zueinander stehenden Richtungen, durch einfaches Befestigen des Klemmelementes an diesem Träger erfolgt. Durch Anschrauben des Klemmelementes an den Träger wird über ein erstes Federelement eine erste Klemmkraft sowie über ein zweites Federelement eine dazu senkrecht wirkende zweite Klemmkraft auf den Maßstab eingeleitet. Die beiden Klemmkräfte werden durch die Ausgestaltung des Klemmelementes reproduzierbar aufgebracht.

Vorteilhafte Ausführungen der Erfindung sind in den abhängigen Ansprüchen angegeben.

Anhand der Zeichnungen wird ein Ausführungsbeispiel der Erfindung näher erläutert.

Es zeigt
- Figur 1: ein erfindungsgemäß ausgestaltetes Klemmelement in perspektivischer Ansicht;
- Figur 2: einen ersten Montagezustand des Klemmelementes gemäß Figur 1 mit einem Maßstab;
- Figur 3: einen zweiten Montagezustand des Klemmelementes;
- Figur 4: einen dritten Montagezustand des Klemmelementes, und
- Figur 5: das Klemmelement mit dem geklemmten Maßstab im Endzustand der Klemmung.

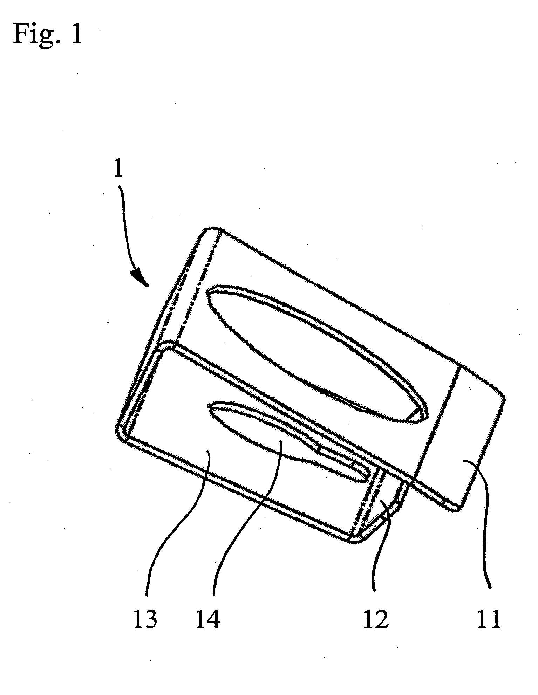

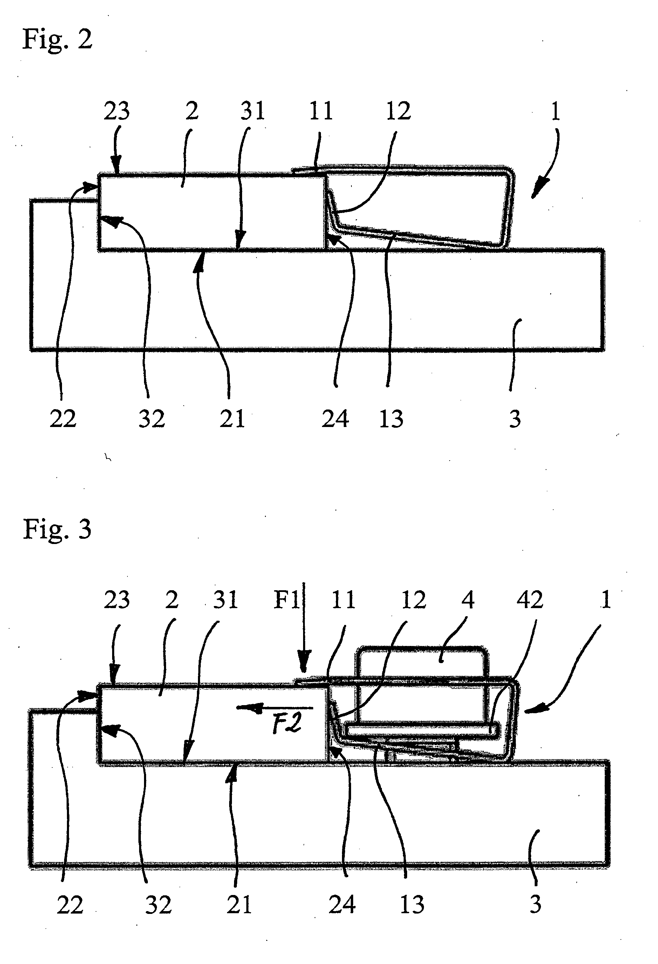

In Figur 1 ist ein erfindungsgemäß ausgestaltetes Klemmelement 1 in perspektivischer Ansicht dargestellt. Wie mittels dieses Klemmelementes 1 ein Maßstab 2 an einem Träger 3 klemmend befestigt wird, ist in den Figuren 2 bis 5 jeweils in einem Schnitt senkrecht zur Messrichtung dargestellt. Der Maßstab 2 besteht beispielsweise aus Glas oder Metall und weist zwei parallel zueinander verlaufende Oberflächen auf, nämlich die Oberseite 23 und die Unterseite 21, sowie zwei senkrecht dazu ausgerichtete Seitenflächen 22 und 24. Auf der Oberseite 23 trägt er eine nicht dargestellte lichtelektrisch, magnetisch, induktiv oder kapazitiv abtastbare Messteilung.

Der Träger 3 ist in vorteilhafter Weise direkt ein Maschinenteil, dessen Position zu messen ist. Der Träger 3 kann aber auch ein Zwischenträger sein, der dann wiederum an einem zu messenden Objekt befestigt werden kann.

Das Klemmelement 1 ist dazu ausgelegt, den Maßstab 2 einerseits mit einer ersten Klemmkraft F1 an die Anbaufläche 31 zu drängen und andererseits mit einer zweiten Klemmkraft F2 an einen senkrecht zur Anbaufläche 31 wirkenden Anschlag 32 zu drängen. Der Anschlag 32 ist im Beispiel eine senkrecht zur Anbaufläche 31 ausgerichtete Anschlagfläche 32. Hierzu weist das Klemmelement 1 ein erstes Federelement 11 auf, das in einer ersten Richtung hin zur Anbaufläche 31 federnd ist und beim Anbau die erste Klemmkraft F1 auf den Maßstab 2 ausübt. Das Klemmelement 1 weist weiterhin ein zweites Federelement 12 auf, das in einer zweiten Richtung hin zur Anschlagfläche 32 federnd ist und beim Anbau die zweite Klemmkraft F2 auf den Maßstab 2 ausübt.

Im dargestellten Beispiel ist das Klemmelement 1 ein Biegeteil aus Federblech, bei dem das erste Federelement 11 ein erster federnder Biegearm ist und das zweite Federelement 12 ein zweiter federnder Biegearm ist. Das erste Federelement 11 in Form eines Biegearms und das zweite Federelement 12 in Form eines Biegearms sind an einem Befestigungsabschnitt 13 des Klemmelementes 1 angeordnet, an dem beim Befestigen des Klemmelementes an dem Träger 3 ein Befestigungselement 4 angreift.

Zum Anbau des Maßstabs 2 an den Träger 3 wird der Maßstab 2 mit seiner Unterseite 21 auf die Anbaufläche 31 aufgelegt und mit einer senkrecht dazu verlaufenden Seite 22 an die Anschlagfläche 32 angelegt, wie in Figur 2 dargestellt ist. Das Klemmelement 1 wird an den Maßstab 2 angesetzt, so dass das erste Federelement 11 mit der Oberseite 23 des Maßstabs 2 in Kontakt tritt und das zweite Federelement 12 mit einer senkrecht dazu verlaufenden Seite 24 des Maßstabs 2 in Kontakt tritt. In Messrichtung wird das Klemmelement 1 derart positioniert, dass sein Befestigungsabschnitt 13 mit der darin vorgesehenen Bohrung 14 über einer in dem Träger 3 vorgesehenen Gewindebohrung zu liegen kommt.

Das erste Federelement 11 ist derart ausgebildet, dass es beim Befestigen des Klemmelementes 1 am Träger 3 mittels des Befestigungselementes 4 die erste Klemmkraft F1 einleitet und das zweite Federelement 12 ist derart ausgebildet, dass es beim Befestigen des Klemmelementes 1 am Träger 3 mittels des Befestigungselementes 4 auch die zweite Klemmkraft F2 einleitet. Hierzu weist das Klemmelement 1 den Befestigungsabschnitt 13 auf, an dem das Befestigungselement 4 angreift und diesen Befestigungsabschnitt 13 an die Anbaufläche 31 drängt, wodurch die Klemmkräfte F1 und F2 eingeleitet werden.

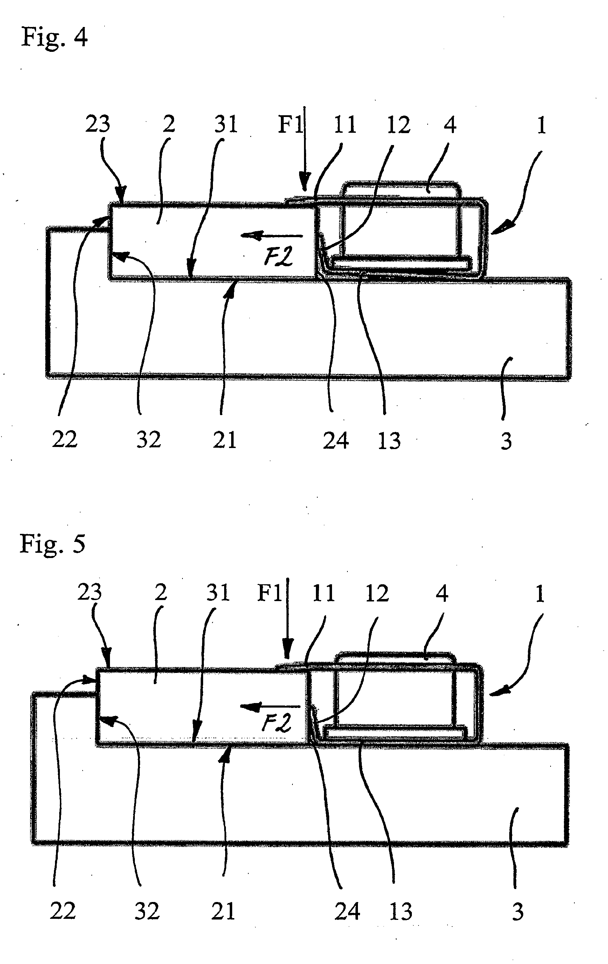

Figur 3 zeigt, wie das Befestigungselement 4 in Form einer Schraube durch eine Bohrung 14 des Befestigungsabschnitts 13 hindurch in den Träger 3 eingeschraubt wird, und dabei der Kopf der Schraube 4 den Befestigungsabschnitt 13 zur Anbaufläche 31 hin verlagert. Wie in Figur 4 dargestellt ist, verursacht das fortschreitende Einschrauben der Schraube 4 eine Erhöhung der Klemmkraft F1 und gleichzeitig eine Erhöhung der Klemmkraft F2. Hierzu verläuft der Befestigungsabschnitt 13 geneigt zur Anbaufläche 31, und stützt sich an einer Stelle an der Anbaufläche 31 ab. Beim Einschrauben der Schraube 4 in den Träger 3 verändert sich der Neigungswinkel des Befestigungsabschnitts 13 relativ zur Anbaufläche 31, im Beispiel wird der Neigungswinkel verringert. Die Veränderung des Neigungswinkels des Befestigungsabschnitts 13, also das Verkippen, verursacht eine Erhöhung der Klemmkraft F1 sowie gleichzeitig eine Erhöhung der Klemmkraft F2.

Figur 5 zeigt den Maßstab 2 fertig geklemmt. In diesem Zustand ist der Befestigungsabschnitt 13 vollständig an die Anbaufläche 31 angedrückt und verläuft parallel zur Anbaufläche 31.

Besonders vorteilhaft ist es, wenn das zweite Federelement 12 den Maßstab 2 in seiner Mitte kontaktiert, so dass die Klemmkraft F2 im fertig geklemmten Zustand in der neutralen Ebene des Maßstabs 2 angreift.

Durch die Erfindung wird es ermöglicht, den Maßstab 2 mit einer durch die Konstruktion des Klemmelementes vorgegebenen Klemmkraft F1, F2 an dem Träger 3 reproduzierbar zu befestigen. Da die zur Klemmung erforderliche Kraft F1 und F2 in den zwei zueinander senkrecht stehenden Richtungen allein durch das Befestigen des Befestigungselementes 4 am Träger 3 aufgebracht wird, sind Montagefehler aufgrund unterschiedlicher individueller Handhabung durch den Monteur ausgeschlossen, aber zumindest verringert.

Zwischen dem Befestigungsabschnitt 13 und dem Kopf der Schraube 4 kann eine Unterlegscheibe 42 eingebracht sein. Durch Variation des Durchmessers der Unterlegscheibe 42 kann die Klemmkraft F2 variiert werden. Je größer der Durchmesser der Unterlegscheibe 42, umso näher greift die Befestigungskraft der Schraube 4 am zweiten Federelement 12 an, so dass die Klemmkraft F2 gegenüber der Verwendung von kleineren Unterlegscheiben erhöht ist.

Das Klemmelement 1 ist besonders kostengünstig herstellbar, wenn es einstückig als Biegeteil aus Federblech ausgebildet ist. In nicht dargestellter

Weise kann es aber auch ein massiveres Teil sein, in dem zur Funktion erforderliche Biegegelenke ausgebildet sind, insbesondere als Festkörpergelenke.

Je nach Länge des Maßstabs 2 können mehrere oben beschriebene Klemmelemente 1 zur Befestigung verwendet werden, die dann, in Messrichtung betrachtet, voneinander beabstandet angeordnet werden.

## Patentansprüche

1. Vorrichtung zur klemmenden Befestigung eines Maßstabs (2) an einer Anbaufläche (31) eines Trägers (3), umfassend zumindest ein Klemmelement (1), das mittels eines Befestigungselementes (4) am Träger (3) befestigbar ist, wobei das Klemmelement (1) ein erstes Federelement (11) aufweist, das in einer ersten Richtung hin zur Anbaufläche (31) federnd ist, und beim Befestigen des Klemmelementes (1) mittels des Befestigungselementes (4) eine erste Klemmkraft (F1) auf den Maßstab (2) in Richtung der Anbaufläche (31) einleitet, und das Klemmelement (1) ein zweites Federelement (12) aufweist, das in einer zweiten Richtung federnd ist, die zur ersten Richtung senkrecht verläuft,
**dadurch gekennzeichnet, dass** das zweite Federelement (12) derart ausgebildet ist, dass es beim Befestigen des Klemmelementes (1) mittels des Befestigungselementes (4) eine zweite Klemmkraft (F2) auf den Maßstab (2) in diese zweite Richtung einleitet.

2. Vorrichtung nach Anspruch 1, **dadurch gekennzeichnet, dass** das erste Federelement (11) und das zweite Federelement (12) jeweils an einem Befestigungsabschnitt (13) des Klemmelementes (1) angeordnet sind, der beim Befestigen durch das Befestigungselement (4) verlagert wird, und durch diese Verlagerung die erste Klemmkraft (F1) und die zweite Klemmkraft (F2) eingeleitet werden.

3. Vorrichtung nach Anspruch 2, **dadurch gekennzeichnet, dass** die Verlagerung eine Änderung des Neigungswinkels zwischen der Anbaufläche (31) und dem Befestigungsabschnitt (13) ist.

4. Vorrichtung nach einem der vorhergehenden Ansprüche, **dadurch gekennzeichnet, dass** das Klemmelement (1) ein Biegeteil aus Federblech ist.

5. Vorrichtung nach einem der vorhergehenden Ansprüche, **dadurch gekennzeichnet, dass** das Befestigungselement (4) eine Schraube ist, die in den Träger (3) einschraubbar ist.

6. Vorrichtung, mit einem Maßstab (2) sowie einem Träger (3) mit einer Anbaufläche (31), wobei der Maßstab (2) mit einer Vorrichtung gemäß einem der vorhergehenden Ansprüche 1 bis 5 an der Anbaufläche (31) des Trägers (3) klemmend befestigt ist.

7. Vorrichtung nach Anspruch 6, **dadurch gekennzeichnet, dass** der Träger (3) einen Anschlag (32) aufweist, der senkrecht zur Anbaufläche (31) wirkt, und wobei das zweite Federelement (12) des Klemmelementes (1) den Maßstab (2) mit der zweiten Klemmkraft (F2) hin zu diesem Anschlag (32) drängt.

8. Vorrichtung nach Anspruch 7, **dadurch gekennzeichnet, dass** das zweite Federelement (12) den Maßstab (2) in der Mitte seiner Dicke kontaktiert und dort die zweite Klemmkraft (F2) einleitet.

## Claims

1. Device for fastening a scale (2) in a clamping manner to a mounting surface (31) of a carrier (3), comprising at least one clamping element (1) which is fastenable to the carrier (3) by means of a fastening element (4), wherein the clamping element (1) has a first spring element (11) which is flexible in a first direction towards the mounting surface (31) and, while the clamping element (1) is fastened by means of the fastening element (4), induces a first clamping force (F1) onto the scale (2) in the direction of the mounting surface (31), and the clamping element (1) has a second spring element (12) which is flexible in a second direction that extends perpendicularly to the first direction, **characterized in that** the second spring element (12) is configured such that, while the clamping element (1) is fastened by means of the fastening element (4), it induces a second clamping force (F2) onto the scale (2) in this second direction.

2. Device according to Claim 1, **characterized in that** the first spring element (11) and the second spring element (12) are each arranged on a fastening portion (13) of the clamping element (1), said fastening portion (13) being displaced during fastening by the fastening element (4), and the first clamping force (F1) and the second clamping force (F2) are induced by this displacement.

3. Device according to Claim 2, **characterized in that** the displacement is a change in the inclination angle between the mounting surface (31) and the fastening portion (13).

4. Device according to one of the preceding claims, **characterized in that** the clamping element (1) is a bending part made of spring sheet.

5. Device according to one of the preceding claims, **characterized in that** the fastening element (4) is a screw, which is able to be screwed into the carrier (3).

6. Device having a scale (2) and a carrier (3) with a mounting surface (31), wherein the scale (2) is fastened in a clamping manner to the mounting surface (31) of the carrier (3) by way of a device according to one of the preceding Claims 1 to 5.

7. Device according to Claim 6, **characterized in that** the carrier (3) has a stop (32) which acts perpendicularly to the mounting surface (31), and wherein the second spring element (12) of the clamping element (1) urges the scale (2) in the direction of said stop (32) by way of the second clamping force (F2).

8. Device according to Claim 7, **characterized in that** the second spring element (12) comes into contact with the scale (2) in the middle of its thickness and induces the second clamping force (F2) there.

## Revendications

1. Dispositif de fixation par serrage d'une règle graduée (2) à une surface de montage (31) d'un support (3), comportant au moins un élément de serrage (1) qui peut être fixé au support (3) au moyen d'un élément de fixation (4), l'élément de serrage (1) comprenant un premier élément de ressort (11) qui est flexible dans une première direction vers la surface de montage (31) et, lors de la fixation de l'élément de serrage (1) au moyen de l'élément de fixation (4), applique une première force de serrage (F1) sur la règle graduée (2) en direction de la surface de montage (31), et l'élément de serrage (1) comprenant un deuxième élément de ressort (12) qui est flexible dans une deuxième direction qui s'étend perpendiculairement à la première direction, **caractérisé en ce que** le deuxième élément de ressort (12) est réalisé de telle sorte que, lors de la fixation de l'élément de serrage (1) au moyen de l'élément de fixation (4), il applique une deuxième force de serrage (F2) sur la règle graduée (2) dans cette deuxième direction.

2. Dispositif selon la revendication 1, **caractérisé en ce que** le premier élément de ressort (11) et le deuxième élément de ressort (12) sont disposés respectivement sur une portion de fixation (13) de l'élément de serrage (1), laquelle portion de fixation est déplacée lors de la fixation par l'élément de fixation (4), et la première force de serrage (F1) et la deuxième force de serrage (F2) sont appliquées par ce déplacement.

3. Dispositif selon la revendication 2, **caractérisé en ce que** le déplacement est une modification de l'angle d'inclinaison entre la surface de montage (31) et la portion de fixation (13).

4. Dispositif selon l'une quelconque des revendications précédentes, **caractérisé en ce que** l'élément de serrage (1) est une pièce pliée en tôle à ressort.

5. Dispositif selon l'une quelconque des revendications précédentes, **caractérisé en ce que** l'élément de fixation (4) est une vis qui peut être vissée dans le support (3).

6. Dispositif, comprenant une règle graduée (2) ainsi qu'un support (3) pourvu d'une surface de montage (31), dans lequel la règle graduée (2) est fixée par serrage à la surface de montage (31) du support (3) à l'aide d'un dispositif selon l'une quelconque des revendications précédentes 1 à 5.

7. Dispositif selon la revendication 6, **caractérisé en ce que** le support (3) comprend une butée (32) qui agit perpendiculairement à la surface de montage (31), et le deuxième élément de ressort (12) de l'élément de serrage (1) poussant la règle graduée (2) en direction de cette butée (32) à l'aide de la deuxième force de serrage (F2).

8. Dispositif selon la revendication 7, **caractérisé en ce que** le deuxième élément de ressort (12) est en contact avec la règle graduée (2) au centre de son épaisseur et y applique la deuxième force de serrage (F2).
